# EUROPÄISCHE PATENTANMELDUNG

(11) **EP 1 106 056 A1**
(43) Veröffentlichungstag der Anmeldung: **13.06.2001**
(21) Anmeldenummer: 00126259.1
(22) Anmeldetag: 01.12.2000
(51) Int. Cl.: A01F 15/07

(54) **Rundballenpresse**

(30) Priorität: 10.12.1999 DE 19959574
(71) Anmelder: DEERE & COMPANY, Moline, Illinois 61265-8098 (US)
(72) Erfinder: Viaud, Jean, 70100 Gray (FR)
(74) Vertreter: Magin, Ludwig Bernhard

(57) **Zusammenfassung**

1. Ballenpresse

2.1. Bisherige Ballenpressen, bei denen ein oberer Gehäuseteil wegbewegt werden konnte, um den Auswurf eines Ballens und gegebenenfalls das Wickeln eines Ballens mit Folie zu ermöglichen, waren nachteilig, weil die Bauhöhe oder die Schwenkhöhe des oberen Gehäuseteils zu groß war und sich somit der Schwenkpunkt zu weit nach oben verlagerte, wodurch eine Kippgefahr entstand.

2.2. Es wird eine Ballenpresse (10) vorgeschlagen, deren oberer Gehäuseteil (24) mittels in der Art eines Parallelogramms angeordneter Lenker (26, 28) angehoben werden kann.

2.3. Ballenpressen (10) werden in der Landwirtschaft eingesetzt.

## Beschreibung

Die Erfindung betrifft eine Ballenpresse mit einem Rahmen und einem Ballenpreßraum, der umfangsseitig von einem oberen und einem unteren Gehäuseteil umgeben wird.

Aus der WO-A1-97/18699 ist eine Rundballenpresse bekannt, deren Preßraum von einem oberen und einem unteren Gehäuseabschnitt umgeben wird. Der obere Gehäuseabschnitt ist in einem Lager an den vorderen Rahmenbereich schwenkbar angeschlossen und mittels eines Hydraulikzylinders vertikal bewegbar. An dem unteren Gehäuseabschnitt ist ein Wickelarm angebracht, der um eine vertikale Achse schwenkbar ist und einen Ballen umwickeln kann, sobald der obere Gehäuseabschnitt nach oben geschwenkt ist.

Die DE-38 05 224 zeigt eine Rundballenpresse mit einem oberen und einem unterem Gehäuseabschnitt, wobei der obere Gehäuseabschnitt mittels Hydraulikzylinder an einem Rahmen vertikal beweglich getragen ist.

Das der Erfindung zugrunde liegende Problem wird darin gesehen, daß der obere Gehäuseabschnitt im aufgeschwenkten Zustand oder die Rundballenpresse mit dem Rahmen und dem Hydraulikzylinder eine hohe Bauweise ergeben, die insbesondere beim Arbeiten am Hang zum Kippen der Rundballenpresse führen kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird auf einen Rahmen oberhalb des oberen Gehäuseteils verzichtet und der obere Gehäuseteil ragt im geöffneten Zustand des Ballenpreßraums nicht mit seiner gesamten Länge nach oben, sondern wird nur parallel angehoben, bis der Ballen entweichen kann. Der Lenker läßt zudem eine zumindest bedingt gesteuerte Bewegung des oberen Gehäuseteils zu. Ein einzelner Lenker kann z. B. in der Art einer Gabel ausgebildet sein, die mittig auf dem Rahmen vertikal schwenkbar gelagert ist und den oberen Gehäuseteil auf beiden Seiten umgibt, um ihn in seinem Schwenkpunktbereich zu fassen.

Wenn mehrere Lenker, insbesondere auch pro Seite verwendet werden, kann ein Parallelogramm gebildet werden, mit dem zum einen die Kräfte leichter aufgenommen werden können und mit dem der obere Gehäuseteil in einer vordefinierten Weise bewegt werden kann.

Wenn der untere Gehäuseteil wenigstens teilweise vertikal schwenkbar ist, z. B. wenn wenigstens ein Abschnitt nach unten gekippt werden kann, kann die Auslaßöffnung vergrößert und der gebildete Rundballen leichter ausgeworfen werden.

Die Verwendung einer Wickelvorrichtung, z. B. mit einer Stretchfolie, in dem Bereich zwischen dem unteren und dem oberen Gehäuseteil macht es möglich, die Rundballenpresse sowohl als Presse wie auch als Ballenwickler einzusetzen, ohne den Ballen zum Wickelvorgang abgeben zu müssen. Die Wickelvorrichtung kann sowohl an dem unteren wie auch an dem oberen Gehäuseteil angebracht sein, einen rotierenden Arm oder eine feste Wickelmaterialführung enthalten.

Zwar wäre es grundsätzlich möglich, Wickelmaterial auf einer Bahn zu führen, die sich eng an die Außenkanten des Ballenpreßraums anschließt und somit deren Baubreite nicht oder nur geringfügig erhöht. Aufgrund der Schwierigkeiten, das Wickelmaterial auf einer derart ungleichmäßigen, nämlich geraden und gekrümmten Strecke zu führen, ist es von Vorteil, wenn die Führungsbahn einer Kreisbahn folgt. Eine ungestörte Abgabe des Ballens wird dann erzielt, wenn diese Führungsbahn auf der Breite des Ballens im Abgabebereich unterbrochen ist.

Damit die Unterbrechung der Führungsbahn leichter von einer das Wickelmaterial tragenden Rolle passiert werden kann, ist ein Teil der Führungsbahn vorgesehen, der sich an dem unteren Gehäuseteil befindet und grundsätzlich zu einer geschlossenen Führungsbahn führt. Lediglich beim Auswerfen des Rundballens wird dieser Teil mit dem sich nach unten wegbewegenden Gehäuseteil von der übrigen Führungsbahn getrennt und gibt den Auswurf frei.

Die Führung einer das Wickelmaterial tragenden Rolle ist relativ einfach, wenn diese in einem Rohr oder sonstigen Profil beweglich gelagert ist, das außen einen Schlitz aufweist, durch den sich ein Träger für die Rolle erstrecken kann, während das Innere eine zuverlässige Führung bietet. Alternativ kann ein Rohr oder ein Profilstab vorgesehen werden, auf dessen Außenfläche ein Wickelmaterialträger gleiten oder rollen kann und das Rohr oder den Profilstab so umgibt, daß er die Führungsbahn nicht verlassen kann.

In einem Fall, in dem die Unterbrechung der Führungsbahn nicht mit einem Zwischenstück überbrückt wird, ist es hilfreich, wenn deren Ende fanggmaulartig ausgebildet ist, so daß ein die Rolle tragender Schlitten in der Führungsbahn beim Erreichen des gegenüberliegenden Endes der Führungsbahn auch bei einer geringen Materialverbiegung noch erfaßt und in die Führungsbahn eingeführt werden kann.

Wenn der Schlitten in der Führungsbahn länger ausgebildet ist als deren Unterbrechung, kann er aus dieser nicht entweichen. Vorzugsweise ist er so lange wie die Führungsbahn ohne Unterbrechung.

Eine Bewegung des Schlittens in der Führungsbahn kann mittels wenigstens eines Motors erreicht werden, der sich entweder auf dem Schlitten befindet und sich mittels eines Reibrad- oder Zahnradeingriffs an der Führungsbahn abstützt, oder der sich auf, in oder an der Führungsbahn befindet und in den Schlitten eingreift, z. B. in einen äußeren Zahnkranz. Wenn mehrere Motoren vorgesehen sind, ist auch dann ein Antrieb gesichert, wenn der Motor die Unterbrechung des Schlittens oder der Führungsbahn erreicht.

Die Umfassung des Ballenpreßraums kann grundsätzlich auf verschiedene Weise erfolgen, d. h. mit einem oder mehreren Sätzen von Riemen, mit Ketten oder mit Walzen. Die Verwendung von Walzen auf einer Kreisbahn hat den Vorteil der einfachen Ausführbarkeit und der erhöhten Stabilität in dem Gehäuseteil. Allerdings kann die Kontour einer Kreisbahn auch mit Riemen oder Ketten erreicht werden, wenn diese über entsprechend ausgebildete und angeordnete Rollen geführt werden.

Die Verwendung zweier Lenker kann zunächst in der Form eines Parallelogramms erfolgen, so daß eine reine Parallelverschiebung beim Anheben stattfindet. Werden die Lenker unterschiedlich lange ausgebildet, ist es möglich, eine mehr oder weniger große Kippbewegung des oberen Gehäuseteils zu erreichen, die z. B. den Rundballen leichter freigibt oder eine horizontale Bewegungskomponente aufweist, um eine Einwirkung auf den Rundballen zu vermeiden.

Mittels einer Stellvorrichtung kann der obere Gehäuseteil ferngesteuert und ohne Anstrengung für eine Bedienungsperson angehoben und abgesenkt werden.

Damit der Rundballen beim Umwickeln mit einem Wickelmaterial seine Form behält, wird er nach seiner Bildung von einem Netz oder von Garn umschlungen, das durch eine Zufuhröffnung in dem oberen Gehäuseteil eingeführt wird.

In der Zeichnung ist ein nachfolgend näher beschriebenes Ausführungsbeispiel der Erfindung dargestellt. Es zeigt:
- Fig. 1: eine Ballenpresse in schematischer Darstellung und in Seitenansicht,
- Fig. 2: eine kreisförmige Führungsbahn der Ballenpresse aus Figur 1 in Draufsicht,
- Fig. 3: die Führungsbahn in einem Schnitt entlang der Linie 3-3 in Figur 2 und in der Blickrichtung der dazugehörigen Pfeile und
- Fig. 4: die Ballenpresse nach Figur 1 in Seitenansicht während eines Wickelbetriebs.

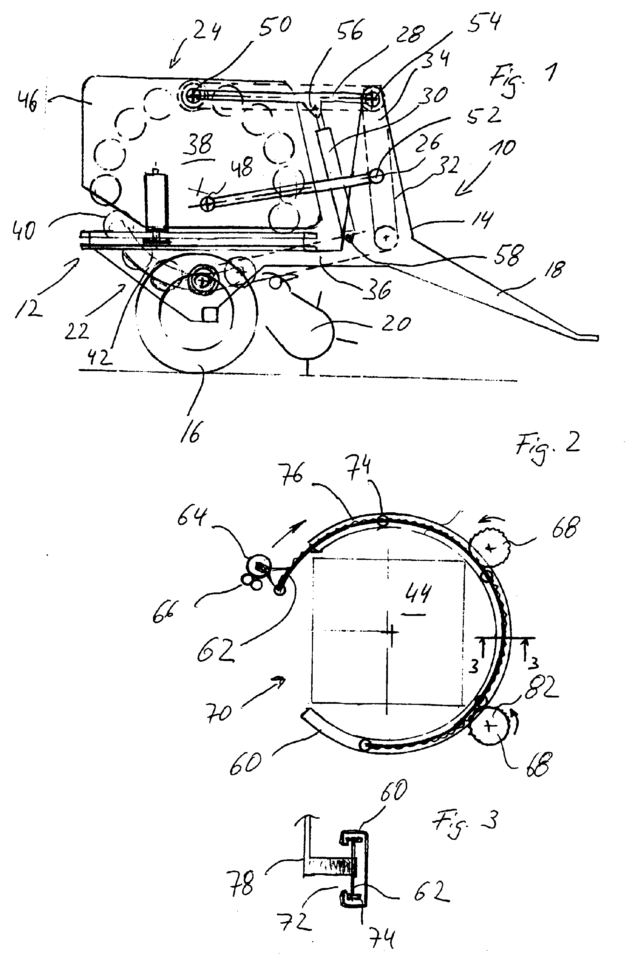

Figur 1 zeigt eine Ballenpresse 10 mit einer Wickelvorrichtung 12.

Die Ballenpresse 10 enthält einen Rahmen 14, Räder 16, eine Deichsel 18, eine Gutaufnahmevorrichtung 20, einen unteren Gehäuseteil 22, einen oberen Gehäuseteil 24, untere Lenker 26, obere Lenker 28, eine Stellvorrichtung 30 und einen Antrieb 32.

Die Ballenpresse 10 ist in diesem Ausführungsbeispiel als eine Rundballenpresse ausgebildet, die einen Rundballen herstellen und anschließend mit Folie oder dergl. umwickeln kann. Die Ballenpresse 10 ist mit einem konstanten Preßvolumen ausgebildet; könnte aber auch so ausgebildet werden, daß das Preßvolumen variabel ist. Die Ballenpresse 10 wird zum Pressen von auf dem Boden liegendem Erntegut, wie Stroh, Heu, Silage oder dergleichen verwendet und hierfür von einem Fahrzeug über ein Feld bewegt. Alternativ kann die Ballenpresse 10 auch stationär in einem Industriebetrieb betrieben werden, um z. B. Müll, Stoff, Papier oder dergleichen Industrieprodukte zu pressen und zu verpacken.

Der Rahmen 14 ist als Schweißzusammenbau gebildet und enthält einen breiten Mast 34 oder mehrere beabstandete Masten 34 und Längsträger 36, die sich in der Fahrtrichtung- und im wesentlichen in Fortsetzung der Deichsel 18 erstrecken.

Die Räder 16 sind entweder einzeln oder mittels einer Achse und starr oder gefedert an die Längsträger 36 des Rahmens 14 angebracht und tragen die Ballenpresse 10.

Die Deichsel 18 ist starr oder vertikal einstellbar mit dem Rahmen 14 verbunden und stellt die Verbindung zu dem nicht gezeigten Fahrzeug her.

Die Gutaufnahmevorrichtung 20 ist in herkömmlicher Weise ausgebildet und angeordnet. Wie von herkömmlichen sogenannten Pick-ups bekannt, sind eine Vielzahl nicht näher bezeichneter Federzinken vertikal drehbar vorgesehen, die das Erntegut von dem Boden auflesen und einem zwischen den Gehäuseteilen 22, 24 gebildeten Ballenpreßraum 38 zuführen. Die Förderrichtung der Gutaufnahmevorrichtung 20 weist insbesondere hinter den Federzinken relativ steil nach oben. Stromabwärts der Gutaufnahmevorrichtung 20 kann ein Zwischenförderer oder ein Schneidwerk vorgesehen werden, wie dies ebenfalls bekannt ist.

Der untere Gehäuseteil 22 setzt sich aus mehreren - hier fünf - Walzen 40 zusammen, die aus Stahl gebildet sind und mit ihren axialen Endbereichen in gebogenen Wangen 42 drehbar gelagert sind. Die innenliegenden Umfangskanten der Walzen 40 liegen auf einem Kreisbogen, so daß sich mit entsprechenden Walzen 40 des oberen Gehäuseteils 24 ein zylindrischer Ballenpreßraum 38 von im wesentlichen rundem Querschnitt ergibt.

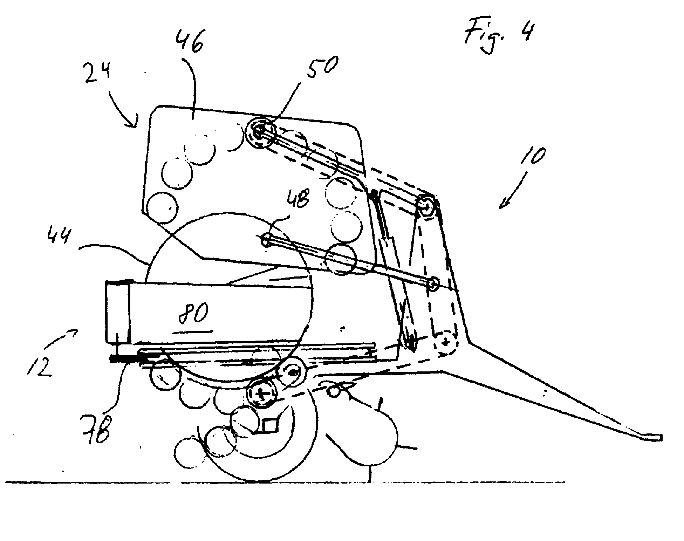

Die Wangen 42 sind ebenfalls aus Stahl gebildet und mittels nicht dargestellter Streben miteinander verbunden, um ein torsions- und biegesteifes Gebilde zu ergeben. Die Wangen 42 sind im Bereich der zweiten Walze 40 von vorne in den Längsträgern 36 vertikal schwenkbar gelagert und können zwischen den in den Figuren 1 und 4 gezeigten Stellungen bewegt werden. Hierzu ist ein nicht gezeigter Stellmotor - insbesondere ein Hydraulikzylinder - vorgesehen, der fernsteuerbar ist. Während der Ballenbildung stützt sich ein sich bildender Ballen 44 auf den Walzen 40 des unteren Gehäuseteils 22 ab. Anstatt den gesamten unteren Gehäuseteil 22 vertikal zu schwenken, könnte auch nur ein Bereich vertikal schwenkbar ausgebildet werden.

Der obere Gehäuseteil 24 weist zehn Walzen 40 auf, die derselben Kreislinie wie die Walzen 40 in dem unteren Gehäuseteil 22 folgen und in Seitenwänden 46 drehbar aufgenommen sind. Die Seitenwände 46 schließen den Ballenpreßraum 38 seitlich ab und verhindern das Entweichen von Erntegut. Im unteren und im oberen Randbereich der Seitenwände 46 ist jeweils ungefähr in der Mitte ein unteres bzw. ein oberes Lager 48 bzw. 50 vorgesehen, das z. B. aus nach außen gerichteten Zapfen, Bolzen, Gelenken oder dergleichen gebildet ist. Bei dem bevorzugten Ausführungsbeispiel handelt es sich bei dem oberen Lager 50 um die Fortsetzung einer Welle einer der Walzen 40, in diesem Fall der sechsten Walze 40 von vorne. Während im rückwärtigen und in Figur 1 und 4 links gelegenen Bereich des unteren und oberen Gehäuseteils 22 und 24 die jeweils endseitigen Walzen 40 wie die übrigen Walzen 40 zueinander angeordnet sind, weisen sie im vorderen Bereich einen Abstand zueinander auf, der wenigstens einer Walze 40 entspricht und einen Einlaß für das von der Gutaufnahmevorrichtung 20 ankommende Erntegut bildet.

An dem oberen Gehäuseteil 24 ist eine nicht gezeigte Garn- oder Netzbindevorrichtung vorgesehen, wie sie an sich bekannt ist. Zusätzlich oder alternativ kann auch eine Folienwickelvorrichtung vorgesehen werden, die Folie auf die Umfangsfläche des Ballens 44 aufbringt. Die Trennstelle zwischen dem unteren und dem oberen Gehäuseteil 22 und 24 verläuft nahezu horizontal.

Der untere Lenker 26 erstreckt sich zwischen einem unteren Lager 52 an dem Mast 34 und dem Lager 48 an dem oberen Gehäuseteil 24 und ist auf oder in beiden vertikal schwenkbar gelagert. In der Stellung gemäß Figur 1 verläuft der untere Lenker 26 geringfügig nach unten geneigt, in der Stellung nach Figur 4, geringfügig nach oben geneigt, jeweils mit Bezug auf die Horizontale.

Der obere Lenker 28 erstreckt sich zwischen einem oberen Lager 54 an dem Mast 34 und dem Lager 50 an dem oberen Gehäuseteil 24 und ist auf oder in beiden vertikal schwenkbar gelagert. In der Stellung gemäß Figur 1 verläuft der obere Lenker 28 im wesentlichen horizontal. Der obere Lenker 28 weist zwischen seinen Enden und im Bereich außerhalb des oberen Gehäuseteils 24 einen Anschluß 56 auf, der z. B. ein Gelenk mit einem Bolzen oder dergleichen sein kann.

Nach alledem verlaufen in dem dargestellten Ausführungsbeispiel die Lenker 26, 28 nicht parallel zueinander; dies wäre aber möglich. Wenn im vorliegenden auch jeweils nur von einem unteren und einem oberen Lenker 26, 28 die Rede ist, so ist dies so zu verstehen, daß auf jeder Seite des oberen Gehäuseteils 24 ein unterer und ein oberer Lenker 26 und 28 vorgesehen ist, wenn dies auch nicht zwingend ist.

Die Stellvorrichtung 30 wird in diesem Ausführungsbeispiel von zwei hydraulischen Stellmotoren, sogenannten Hydraulikzylindern, gebildet, die jeweils mit einem Endbereich an dem Anschluß 56 und mit dem anderen Endbereich an einem Lager 58 am Fuß des Mastes 34 angreifen und sich im wesentlichen vertikal erstrecken. Allerdings wären auch andere Ausführungsformen möglich, insbesondere mit nur einem Stellmotor. Die Stellvorrichtung 30 wird mittels einer nicht gezeigten Steuer-oder Regelvorrichtung mit Hydraulikflüssigkeit in einer Richtung beaufschlagt und kann somit ausgefahren werden, um den oberen Lenker 28 und über die Verbindung mit dem oberen Gehäuseteil 24 auch den unteren Lenker 26 vertikal zu verstellen. Die Bedienung der Steuer- oder Regelvorrichtung erfolgt entweder abhängig von Sensoren oder manuell von einer in dem Fahrzeug sitzenden Bedienungsperson.

Der Antrieb 32 ist in der Zeichnung sehr schematisch als ein Umschlingungsgetriebe nur im wesentlichen angedeutet, wobei mehrere Umschlingungsgetriebe auf jeweils nicht gezeigte Weise über eine Gelenkwelle, ein Getriebe und jeweilige Wellen von dem Fahrzeug aus angetrieben werden. Im wesentlichen ist ein Antrieb der unteren und oberen Walzen 40, der Gutaufnahmevorrichtung 20 und evtl. der Wickelvorrichtung 12 erforderlich.

Gemäß der soweit erfolgten Beschreibung bilden die Lenker 26, 28 mit dem oberen Gehäuseteil 24 und dem Mast 34 im wesentlichen ein Parallelogramm. Infolge der Beaufschlagung der Stellvorrichtung 30 kann dieses Parallelogramm nach oben oder unten verstellt werden; demgemäß nimmt der obere Gehäuseteil 24 eine untere Preßstellung - Figur 1 - oder eine obere Freigabestellung - Figur 4 - ein, in der ein nachfolgend beschriebener Wickelvorgang stattfinden kann. Es ist insbesondere aus Figur 4 ersichtlich, daß in der angehobenen Stellung des oberen Gehäuseteils 24 die Ballenpresse 10 nur eine geringfügig vergrößerte Höhe aufweist, so daß sich der Schwerpunkt der Ballenpresse 10 nicht nennenswert nach oben verlagert. Das Anheben erfolgt nur insoweit, als dies zum Durchführen des Wickelvorgangs erforderlich ist.

Der untere Gehäuseteil 22 kann ebenfalls eine obere Stellung - Figur 1 - einnehmen, in der der Ballen 44 gebildet wird, und eine untere Stellung - Figur 4-, in der der Ballen 44 aus dem Ballenpreßraum 38 entladen werden kann.

Die Wickelvorrichtung 12 ist übersichtlich in den Figuren 2 und 3 dargestellt und enthält eine Führungsbahn 60, einen Schlitten 62, einen Wickelmaterialträger 64, eine Brems- und Trennvorrichtung 66 und Motoren 68.

Die Wickelvorrichtung 12 dient dem Umwickeln des Ballens 44 mit einer dehnbaren Folie und wird dann benutzt, wenn es sich bei dem Erntegut um Silagefutter handelt, das luftdicht abgepackt werden muß. Selbstverständlich ist die Anwendung der Wickelvorrichtung 12 nicht auf diese Folie beschränkt. Vielmehr könnte auch ein Netz oder sonstige Folie oder Papier oder dergleichen verwendet werden, um den Ballen 44 einzupacken.

Die Führungsbahn 60 ist derart ausgebildet, daß sie ca. 75 % eines geschlossenen Rings bildet, der in seinem Innern den Ballen 44 mit seinem größten Durchmesser aufnehmen kann. Die Form ist gleichmäßig gekrümmt. Die Führungsbahn 60 ist horizontal angeordnet und zwar im wesentlichen an der Schnittstelle zwischen dem unteren und dem oberen Gehäuseteil 22, 24. Eine Öffnung 70 der Führungsbahn 60 befindet sich symmetrisch zur Längsmittenachse der Ballenpresse 10 an deren rückwärtigen Bereich, so daß ein von dem unteren Gehäuseteil 22 nach hinten und unten gekippter Ballen 44 durch diese Öffnung 70 auf den Boden abgegeben werden kann. Nach einer nicht dargestellten alternativen Ausführungsform ist ein der Öffnung 70 größenmäßig entsprechender Teil der Führungsbahn 70 an dem rückwärtigen Endbereich des unteren Gehäuseteils 22 angebracht und fluchtet mit der übrigen Führungsbahn 60, so daß sich ein mehr oder weniger geschlossener Ring bildet. Gegebenenfalls können an den einander zugelegenen Enden der jeweiligen Abschnitte der Führungsbahn 60 Führungen oder Arretierungen vorgesehen werden, die eine vollkommen geschlossene Führungsbahn 60 ergeben. In Abwesenheit eines solchen ergänzenden Abschnitts der Führungsbahn 60 können an deren Enden auch Fangmäuler oder erweiterte Einführungsbereiche vorgesehen werden. Die Führungsbahn 60 ist aus einem Rohr gebogen, in dessen Außenfläche ein Schlitz 72 eingearbeitet ist. Im Bereich der Motoren 68 ist in die Außenflächen zudem eine nicht näher bezeichnete Öffnung für den Eingriff der Motoren 68 in den Schlitten 62 vorgesehen. Die Führungsbahn 60 ist mittels nicht gezeigter Träger, Streben, Halter und dergleichen auf den Längsträger 36 aufgebaut und sicher gehalten.

Der Schlitten 62 weist im wesentlichen dieselbe Länge und Form wie die Führungsbahn 60 auf und erstreckt sich in deren Innenraum. Zur Verringerung der Reibung sind Rollen 74 vorgesehen, die den Schlitten 62 gegen horizontale oder vertikale Kräfte abstützen. In der nach außen weisenden Oberfläche des Schlittens 62 ist ein Zahnprofil 76 eingebracht. Das Zahnprofil 76 kann in einen aus Stahl gebildeten Schlitten 62 eingeformt werden, mittels einer aus Kunststoff gebildeten biegsamen Zahnstange aufmontiert werden, oder in der Art von durchgehenden Öffnungen in dem Schlitten 62 ausgebildet werden. Soweit es die Belastung zuläßt, kann der Schlitten 62 auch aus einem hochfesten und notfalls verstärkten Kunststoff gebildet werden. Im Bereich des Wickelmaterialträgers 64 und der Brems-und Trennvorrichtung 66 ist an dem Schlitten 62 ein horizontal nach außen weisender Träger 78 vorgesehen. Der Schlitten 62 ist so gelagert und bemessen, daß er innerhalb der Führungsbahn 60 bewegt werden kann.

Der Wickelmaterialträger 64 ist auf dem Träger 78 drehbar gelagert und enthält eine nicht näher bezeichnete Rolle mit dehnbarer Folie 80. Die Rolle ist vertikal ausgerichtet.

Die Brems- und Trennvorrichtung 66 sorgt dafür, daß die Folie 80 beim Aufbringen auf den Ballen 44 gespannt wird und sich luftdicht auf den Ballen 44 bzw. die darunterliegende Folie 80 auflegt und auf dieser haftet. Die Brems- und Trennvorrichtung 66 bewirkt auch ein Trennen - entweder Schneiden oder Reißen - nach dem Wickelvorgang. Ein Anleger oder Halter, um die Folie 80 beim Start des Wickelvorgangs an dem Ballen 44 oder an dem Rahmen 14 zu halten, ist nicht dargestellt, da diese handelsüblich und bekannt sind. In einer nicht gezeigten alternativen Ausführungsform können auch mehrere Wickelmaterialträger 64 und Brems- und Trennvorrichtungen 66 verwendet werden.

Die Motoren 68 sind als Hydraulikmotoren ausgebildet, könnten aber auch Elektromotoren sein. Die Motoren 68 befinden sich an dem der Öffnung 70 gegenüberliegenden Bereich der Führungsbahn 60, und zwar innerhalb der von der Führungsbahn 60 bestimmten äußeren Maschinenbreite. Jeder Motor 68 besitzt ein Zahnrad 82, das in der durch die Pfeile angezeigten Richtung angetrieben werden kann und dauerhaft in das Zahnprofil 76 eingreift. Das Zahnrad 82 greift derart an dem Zahnprofil 76 an, daß es während der Bewegung des Schlittens 62 zu keiner Kollision mit dem Träger 78 und den von diesem getragenen Komponenten kommen kann. Anstelle zweier Motoren 68 können auch ein oder mehr als zwei Motoren 68 verwendet werden. Zudem können die Motoren 68 auch an der Innenseite des Schlittens 62 angreifen, vorausgesetzt, daß das Zahnprofil 76 ebenfalls auf der Innenseite des Schlittens 62 vorgesehen ist.

Nach alledem ergibt sich folgende Funktion der Wickelvorrichtung 12.

Wenn die Motoren 68 angetrieben werden, bewegen sie den Schlitten 62 innerhalb der Führungsbahn 60 in einer horizontalen Ebene. Sobald ein Ende des Schlittens 62 aus der Führungsbahn 60 austritt, durchquert es die Öffnung 70 und tritt an dem folgenden Endbereich der Führungsbahn 60 wieder in diese ein. Auf diese Weise kann der Schlitten 62 und mit ihm der Wickelmaterialträger 64 und die Brems- und Trennvorrichtung 66 eine umlaufende Bewegung durchführen.

Zum Wickelvorgang wird gemäß Figur 4 der obere Gehäuseteil 24 soweit angehoben, daß der Wickelmaterialträger 64 ohne Kollision mit dem oberen Gehäuseteil 24 um den Ballen 44 umlaufen kann. Um einen Versatz der Folie 80 - sh. Figur 4 - auf der Oberfläche des Ballens 44 zu erreichen, werden die Walzen 40 des unteren Gehäuseteils 22 langsam angetrieben und somit der Ballen 44 in Drehung versetzt. Der Wickelvorgang wird solange fortgesetzt, bis der Ballen 44 ausreichend luftdicht verschlossen ist; hierzu bedarf es herkömmlich vier Lagen. Sobald der Wickelvorgang beendet ist, wird die Folie 80 mittels der Brems- und Trennvorrichtung 66 getrennt und der Schlitten 62 in eine Stellung bewegt, in der seine Enden innerhalb der Führungsbahn 60 zu liegen kommen und die Öffnung 70 frei ist. Anschließend wird der Ballen 44 durch eine vertikale und nach hinten gerichtete Schwenkbewegung des unteren Gehäuseteils 22 durch die Öffnung 70 hindurch abgekippt. Abschließend wird der untere Gehäuseteil 22 angehoben und der obere Gehäuseteil 24 abgesenkt, bis der Ballenpreßraum 38 wieder geschlossen ist.

Wenn dies auch nicht beschrieben ist, so könnte auch der untere Gehäuseteil 22 mit den Walzen 40 um eine vertikale Achse drehbar sein, während der Wickelmaterialträger 64 feststeht.

## Patentansprüche

1. Ballenpresse (10) mit einem Rahmen (14) und einem Ballenpreßraum (38), der umfangsseitig von einem unteren und einem oberen Gehäuseteil (22) und (24) umgeben wird, dadurch gekennzeichnet, daß der obere Gehäuseteil (24) mittels wenigstens eines Lenkers (26, 28) vertikal beweglich an dem Rahmen (14) angelenkt ist.

2. Ballenpresse nach Anspruch 1, dadurch gekennzeichnet, daß an jeder Seite des oberen Gehäuseteils (24) wenigstens zwei Lenker (26, 28) angreifen.

3. Ballenpresse nach Anspruch 1 oder 2, dadurch gekennzeichnet, daß der untere Gehäuseteil (22) wenigstens teilweise vertikal schwenkbar ist.

4. Ballenpresse nach einem oder mehreren der vorherigen Ansprüche, dadurch gekennzeichnet, daß an der Schnittstelle zwischen dem unteren und dem oberen Gehäuseteil (22, 24) eine Wickelvorrichtung 12 vorgesehen ist.

5. Ballenpresse nach einem oder mehreren der vorherigen Ansprüche, dadurch gekennzeichnet, daß die Wickelvorrichtung (12) eine wenigstens im wesentlichen kreisförmige Führungsbahn (60) enthält, die im Bereich des Auslasses des Ballenpreßraums (38) eine Öffnung (70) aufweist.

6. Ballenpresse nach Anspruch 5, dadurch gekennzeichnet, daß an dem vertikal schwenkbaren unteren Gehäuseteil -(22) oder an dessen vertikal schwenkbaren Teil ein der Öffnung (70) entsprechender Teil der Führungsbahn (60) angebracht ist.

7. Ballenpresse nach einem oder mehreren der vorherigen Ansprüche, dadurch gekennzeichnet, daß die Führungsbahn (60) ein nach außen schlitzförmig offenes Rohrprofil enthält oder auf ihrer Außenfläche eine Gleit- oder Rollfläche bietet.

8. Ballenpresse nach einem oder mehreren der vorherigen Ansprüche, dadurch gekennzeichnet, daß die Führungsbahn (60) an dem offenen Endbereich in der Art eines Fangmauls ausgebildet ist.

9. Ballenpresse nach einem oder mehreren der vorherigen Ansprüche, dadurch gekennzeichnet, daß die Wickelvorrichtung (12) einen Wickelmaterialträger (64) und einen Schlitten (62) aufweist, der in der Führungsbahn (60) beweglich gelagert ist, wobei der Schlitten (62) länger ist als die Öffnung (70) der Führungsbahn (60).

10. Ballenpresse nach einem oder mehreren der vorherigen Ansprüche, gekennzeichnet durch wenigstens einen Motor (68) an dem Schlitten (62) oder der Führungsbahn (60), der den Schlitten (62) gegenüber der Führungsbahn (60) bewegt.

11. Ballenpresse nach einem oder mehreren der vorherigen Ansprüche, dadurch gekennzeichnet, daß die Gehäuseteile (22, 24) auf einem Kreisbogen gelegene Walzen (40), Riemen oder Ketten aufweisen.

12. Ballenpresse nach einem oder mehreren der vorherigen Ansprüche, dadurch gekennzeichnet, daß die Lenker (26, 28) nicht parallel zueinander verlaufen.

13. Ballenpresse nach einem oder mehreren der vorherigen Ansprüche, dadurch gekennzeichnet, daß zwischen wenigstens einem der Lenker (28) und dem Rahmen (14) eine Stellvorrichtung (30) wirkt.

14. Ballenpresse nach einem oder mehreren der vorherigen Ansprüche, dadurch gekennzeichnet, daß an dem oberen Gehäuseteil (24) eine Netz- oder Garnbindevorrichtung vorgesehen ist.
